# EUROPEAN PATENT SPECIFICATION

(11) **EP 3 937 109 B1**
(45) Date of publication and mention of the grant of the patent: **02.09.2026**
(21) Application number: 20184351.3
(22) Date of filing: 06.07.2020
(51) Int. Cl.: G06Q 30/015

(54) **MULTICHANNEL SERVICE DELIVERY PLATFORM AND METHOD THEREOF**
MEHRKANAL DIENSTBEREITSTELLUNGSPLATTFORM UND -VERFAHREN
PLATEFORME DE DISTRIBUTION DE SERVICE MULTICANAL ET PROCÉDÉ ASSOCIÉ

(43) Date of publication of application: 12.01.2022
(73) Proprietor: BULL SAS, 78340 Les Clayes-sous-Bois (FR)
(72) Inventor: Paradkar, Sameer S., 400 037 Mumbai (IN)
(74) Representative: Novagraaf Technologies

(56) References cited:
- US-A1- 2003 120 593
- US-A1- 2012 158 821
- US-A1- 2014 310 183
- US-A1- 2016 124 742
- US-A1- 2017 187 785

## Description

### Field of the invention

The present invention relates to the field of data processing systems or methods, specially adapted for administrative, commercial, financial, managerial, supervisory or forecasting purposes. More particularly, the invention relates to a multichannel service delivery platform and a method for processing data from said multichannel delivery platform.

### Description of Related Art

Today consumers have many different ways to purchase goods or services from a particular merchant. For example, goods and services may be purchased from the merchant remotely over the Internet or may be purchased in person at a store operated by the merchant. Purchases made over the internet may be made at the merchant's e-commerce website, through a mobile app, or through other purchasing channels; similarly, in person purchases may be made using a payment card or a mobile device and mobile wallet. Additionally, the transaction data received through these different payment processes can be different. For example, the merchant may receive tokenized transaction data in an Internet transaction while the same merchant may receive non-tokenized transaction data when a transaction is conducted at the merchant's store. Hence, many different services can be delivered to users by a service delivery platform. Different devices can be contacted through various networks and may communicate through different protocols and channels. For example, a wireless network, such as a mobile network, may communicate through protocols such as code division multiple access (CDMA), and general packet radio services (GPRS), wireless fidelity (WiFi), etc. Additionally, different channels may be used to communicate with wireless devices, such as short message service (SMS), multimedia service (MMS), email, instant messaging, etc. Further, in addition to wireless networks, other networks may be used, such as the Internet or other wireline networks, to provide services through different protocols and channels, such as through instant messaging, email, etc. As one can see, there are many different communication options in which to deliver services to users. A service is typically tailored to deliver results through each different network protocol and channel, or through multiple networks and channels. For example, a service may be offered that provides a location of a device (a global positioning service (GPS)). This service may be provided for many different network protocols and channels. For example, a location service may provide a location for a device communicating through different wireless protocols. Further, the location may be sent to a user using the different channels stated above. In one example, a location may be sent using SMS through a CDMA network to a cellular phone. However, the service provider does not want to be limited to providing services through this channel only. Rather, a service provider would like to provide the service through many different networks and channels, such as through, MMS, email, etc. Moreover, consumers may need, before and after purchasing goods or services, to browse to different platform according to their needs regarding their purchases. Indeed, customers are progressing through different channels when browsing catalog on a E-commerce site, or when checking similar products, on a web site page, to these previously identified on the E-commerce site. Consumers may also have to progress through another channel to look for a confirmation due to the payment of an ordered product such as on a mail box previously informed, or again through another channel to check whether the order has been delivered in the corresponding retail stores to pick it up.

A solution has been developed to provide the possibility to provide a service through different channels. The document US2007/0204017 describes a service delivery platform which includes a plurality of layers, where each layer is directed towards a separate concern that can be performed independent of a concern of another layer. Such service delivery platform can use different services that may be built in a network independent manner using different types of business rules enforcement.

However, this solution does not allow to build up enterprises application that mix multiple channel of communication to provide the customer with consistency regarding his interaction with several channels.

US 2003/120593 A1 (BANSAL AMAR INDER SINGH [US] ET AL) 26 June 2003 discloses a system for facilitating handling of credit card transactions. The system is made up of a number of components representing different functional areas including presentation framework, application components, application servers, asset management, data management, enterprise application integration, auxiliary services management, and performance management. In one application, the system is utilized by a credit card association to help facilitate processing of credit card transactions. The system provides a platform and associated functionality upon which various types of applications relating to credit card transaction processing can be implemented and executed.

Thus, there is a need for a service delivery platform that at least partially solves the aforementioned problems.

### Technical Problem

The invention aims to overcome the disadvantages of the prior art. In particular, the invention proposes a multichannel service delivery platform, said platform allowing to deliver to a user a unified presentation of his information. Such platform avoids the user to browse on different channels to get information needed. Moreover, such platform can centralize the data from different channels.

This invention also proposes a method for processing data from a multichannel service delivery platform.

### Summary of the invention

The invention is set out in the appended set of claims.

The following sets forth a simplified summary of selected aspects, embodiments and examples However, the summary does not constitute an extensive overview of all the aspects, embodiments and examples. The sole purpose of the summary is to present selected aspects, embodiments and examples in a concise form as ar introduction to the more detailed description of the aspects, embodiments and examples that follow the summary.

Hence, according to an aspect it is provided a multichannel service delivery platform, said platform comprising:
- A service layer comprising a plurality of service modules, said service layer being configured to identify a requested service, from a request message sent by a customer client;
- An orchestration layer comprising a rules database, rules of said database being associated with a service workflow, the orchestration layer being configured to:
   ∘ Identify a service workflow related to the requested service identified by the service layer,
   ∘ Coordinate an execution of the identified service workflow using an integration layer and a presentation layer;
- the integration layer comprising a transformation rules database, said integration layer being configured to:
   ∘ receive the request message from the orchestration layer,
   ∘ identify an appropriate backend service from the service workflow previously identified,
   ∘ transform the request message, according to predetermined transformation rules from the transformation rules database, into a second request message and transmit the second request message to the appropriate backend service,
   ∘ transform a request answer, from the appropriate backend service in response to the second request message, according to predetermined transformation rules, into a second request answer and transmit said second request answer to the presentation layer;
- the presentation layer being configured to deliver the second request answer in a unified format,
- A network layer configured to perform communication between the layers of the multichannel delivery platform and the customer client.

This multichannel service delivery platform allows to build up enterprise applications that mix multiple channels of said enterprise to provide customer journey with consistency regarding their interactions with several channels through the applications. Hence, this platform also allows to route a request to the right channel and to transform said request into a service and to orchestrate the update of databases related to a plurality of channels.

### According to other optional features of the multichannel service delivery platform:

- it comprises a centralized customer orders and product profile layer. Such a centralized customer orders and product profile layer allows to unite all the information of a customer client.
- the integration layer is further configured to update the centralized customer orders and product profile layer based on the second request answer. It provides the capability to mediate which includes transformation, routing, and protocol conversion to transport service requests from the service requester to the correct service provider. Thus, it supports the capabilities required for enabling Service Orientated Architecture such as routing, protocol support and conversion, messaging/interaction style, support for heterogeneous environment, adapters, service interaction, service enablement, service virtualization, service messaging, message processing, and transformation.
- the orchestration layer is further configured to coordinate a service workflow execution related to several services. This allows to invoke multiple services in the context of a service workflow execution.
- it comprises a service composition layer containing functional and/or technical components that facilitate a service component to realize one or more services. This layer provides the implementation or "realization" for services and their operations. It reflects the definition of the service they represent, both in terms of functionality and quality of service. It allows to "bind" the service contract/specification to the implementation of the service in the operational systems layer.
- it comprises a service registry and discovery layer configured to register interactions between a layer, more preferably a microservice, and a registry. Such a layer participates to the security of the solution and the unification of all the information of a customer client.
- it comprises an authentication layer configured to provide access control and rights and enforce policies related to said access control providing access control and enforcing policies related to access control and rights. Such a layer participates to the security of the solution. In particular, the authentication layer is configured to:
   ∘ Receive user access information,
   ∘ Authenticate user by comparing said user access information to a security repository, and
   ∘ Generate a token, upon matching of user access and information to said security repository, said token being sent to the customer client.

Another aspect is a method for processing data from a multichannel service delivery platform, said method comprising the steps of:
- receiving, by a network layer, a request message sent by a customer client,
- identifying a requested service, by a service layer comprising a plurality of service modules, from the request message sent by the customer client;
- identifying a service workflow, by an orchestration layer comprising a business rules database, said business rules being associated with the service workflow related to the requested service identified by the service layer,
- coordinating an execution of the identified service workflow, by the orchestration layer, using an integration layer and a presentation layer;
- identifying, by the integration layer, an appropriate backend service from the service workflow previously identified,
- transforming the request message, according to predetermined transformation rules, into a second request message and transmitting said second request message to the appropriate backend service,
- transmitting a request answer, from the appropriate backend service to the integration layer in response to the second request message,
- transforming, by the integration layer, the request answer according to predetermined transformation rules, into a second request answer and transmitting said second request answer to the presentation layer; and
- delivering, by the presentation layer, the second request answer in a unified format.

### According to other optional features of the method for processing data from a multichannel service delivery platform:

- it further comprises a step of identifying a modification of a core business data from a user and a step of generating several core business data modification messages that can be addressed to the appropriate backend services.
- it further comprises a step of generating a composite service workflow from at least two service workflows, said composite service workflow implying several backend services.
- it further comprises a step of gathering customer profile information from several backend services and a step of updating a centralized customer orders and product profile layer.

### Brief description of the drawings

The foregoing and other objects, features and advantages of the present invention will become more apparent from the following detailed description when taken in conjunction with the accompanying drawings in which:
FIG. 1 is a schematic view of a multichannel service delivery platform according to an embodiment of the invention.
FIG. 2 is a schematic view of a process flow diagram of a method for processing data from a multichannel service delivery platform according to an embodiment of the invention. Dotted lines indicate steps which are optional.
FIG. 3 is a schematic view of processing data from a multichannel service delivery platform of a method according to an aspect of the invention. Dotted lines indicate steps which are optional.

Several aspects of the present invention are disclosed with reference to flow diagrams and/or block diagrams of methods, devices and computer program products according to embodiments of the invention.

On the figures, the flow diagrams and/or block diagrams show the architecture, the functionality and possible implementation of devices or systems or methods and computer program products, according to several embodiments of the invention.

For this purpose, each box in the flow diagrams or block diagrams may represent a system, a device, a module or code which comprises several executable instructions for implementing the specified logical function(s). In some implementations, the functions associated with the box may appear in a different order than indicated in the figures. For example, two boxes successively shown, may be executed substantially simultaneously, or boxes may sometimes be executed in the reverse order, depending on the functionality involved. Each box of flow diagrams or block diagrams and combinations of boxes in flow diagrams or block diagrams, may be implemented by special systems that perform the specified functions or actions or perform combinations of special equipment and computer instructions.

### Detailed description

A description of example embodiments of the invention follows.

In the following description **"request"** can relate to a request for information, generally identified by a "link" on a portal page. A request can be initiated by a "click" on a displayed symbol associated with the "link".

In the following description, **"client"** is a computer device including software that accesses a service made available by another computer device such as a server. Generally, the client accesses the service by way of a network.

In the following description, "a **platform"** may correspond to an access tool to access different types of information and applications via a client system from network resources. A tool to display a page of a platform access portal can be a web browser. However, a portal can also be integrated into other applications. A portal to a platform within the meaning of the invention is advantageously capable of presenting data from several sources such as web applications in a single aggregated web interface or in a browser. In addition, a platform access portal offers the possibility of displaying portlets in the aggregated interface. The portal configuration can include a portal definition with for example a file including an extensible markup language (XML), the portlet definition files for all the portlets associated with the portal, the Java server pages (JSP), the web application descriptors, images such as graphics interchange format files (GIFs), deployment descriptors, configuration files, Java archive files (JAR) that contain logical and layout instructions forms for the platform access portal application, and all other files necessary for a desired portal application.

By **"process", "compute", "determine", "display", "extract", "compare"** or more broadly "executable operation" is meant, within the meaning of the invention, an action performed by a computer device or a processor unless the context indicates otherwise. In this regard, the operations relate to actions and/or processes of a data processing system, for example a computer system or an electronic computing device, which manipulates and transforms the data represented as physical (electronic) quantities in the memories of the computer system or other devices for storing, transmitting or displaying information. In particular, calculation operations are carried out by the processor of the device, the produced data are entered in a corresponding field in a data memory and this field or these fields can be returned to a user for example through a Human Machine Interface formatting such data. These operations may be based on applications or software.

The terms or expressions **"application", "software", "program code",** and **"executable code"** mean any expression, code or notation, of a set of instructions intended to cause a data processing to perform a particular function directly or indirectly (for example after a conversion operation into another code). Exemplary program codes may include, but are not limited to, a subprogram, a function, an executable application, a source code, an object code, a library and/or any other sequence of instructions designed for being performed on a computer system.

By **"processor" or "processing unit"** is meant, within the meaning of the invention, at least one hardware circuit configured to perform operations according to instructions contained in a code. The hardware circuit may be an integrated circuit. Examples of a processor include, but are not limited to, a central processing unit, a graphics processor, an application-specific integrated circuit ("ASIC" according to Anglo-Saxon terminology), and a programmable logic circuit. A single processor or several other units may be used to implement the invention.

By **"coupled"** is meant, within the meaning of the invention, connected, directly or indirectly, with one or more intermediate elements. Two elements may be coupled mechanically, electrically or linked by a communication channel.

The expression **"human-machine interface",** within the meaning of the invention, corresponds to any element allowing a human being to communicate with a computer, in particular and without that list being exhaustive, a keyboard and means allowing in response to the commands entered on the keyboard to perform displays and optionally to select with the mouse or a touchpad items displayed on the screen. Another embodiment is a touch screen for selecting directly on the screen the elements touched by the finger or an object and optionally with the possibility of displaying a virtual keyboard.

By **"computer device",** it should be understood any device comprising a processing unit or a processor, for example in the form of a microcontroller cooperating with a data memory, possibly a program memory, said memories possibly being dissociated. The processing unit cooperates with said memories by means of internal communication bus.

In the following description **"plurality"** within the meaning of the invention corresponds to at least two.

As mentioned hereafter, solutions have been implemented to use API (Applications Programming Interface) to deal or treat with data over a wide range of different channels.

Thus, regarding to the solutions developed in the state of the art, it is proposed to provide an unified solution addressing multichannel problematics which comprises a multichannel architecture connected to an unified presentation interface through a dedicated application programming interface "API" that is used to deliver, to a user, all the information related to his account or profile from one or several channels. This allows to provide an overview of the user interaction over different channels for optimizing and enhancing the user experience by connecting all the channels together.

To this end, the inventors have developed a multichannel service delivery platform and a method that provides a single view of a user journey over different channels.

In the following description, the same references are used to designate the same elements. Embodiments of the present invention generally relate to a service delivery platform that includes a plurality of layers, where each layer is directed towards a separate concern that can be performed independent of a concern of another layer. With such a layering, technical rules or treatment process can be applied without affecting how the service is performed. Hence, if the technical rules change or if a new channel is connected to the platform, the service do not need to be rewritten.

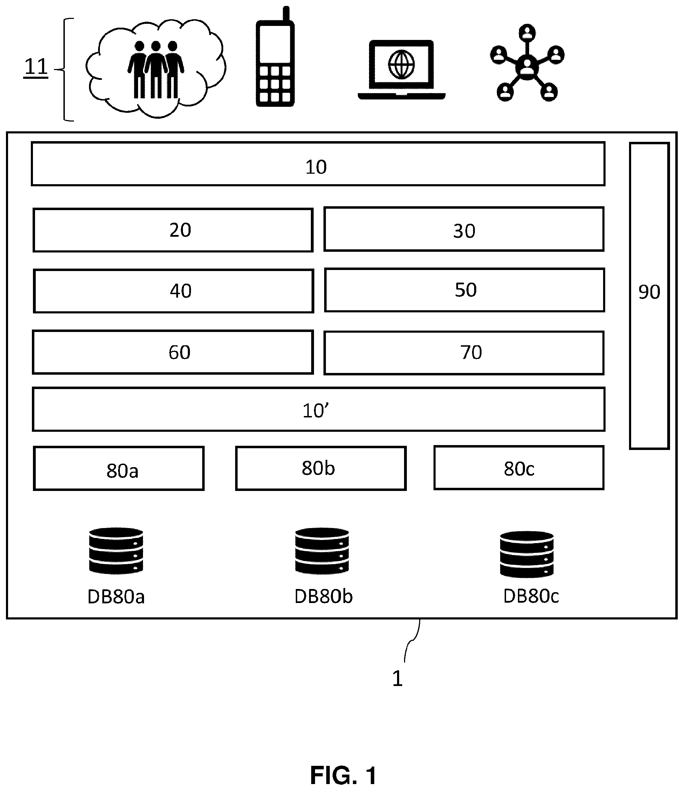

According to a **first aspect** of the invention and as illustrated in figure 1, it is provided a multichannel service delivery platform 1.

Nowadays, many different platforms such as portals (self-care), E-commerce platforms (implying web browsing, comparing and buying goods or services), knowledge management systems (help and support), web content management systems (marketing websites / micro sites), and bill presentment applications are point solutions. An issue regarding these plurality of platforms lies on the presentation layers of each of these platforms which implies inconsistency through applications when browsing on different platforms. The responsive web design techniques and styles utilized to present tailored content along with menu structures are different. The unified presentation layer capabilities, driven by a content management system (CMS) acts as a unified presentation layer for all Web and channels. The customer selfcare, E-commerce, product management, and other components will provide functions in the form of APIs. Channels and partners can build mash-up functionalities on top of these APIs. Hence the Unified Presentation layer is one of the key building blocks of a multi-channel architecture and ensures consistency of business functions across the extended enterprise.

As described in figure 1, a multichannel service delivery platform 1 can be a multiple layered architecture preferably comprising a service layer 40, an orchestration layer 50, an integration layer 60, a presentation layer 10 and a network layer 20.

The multichannel service delivery platform 1 can also comprise a service registry and discovery layer 30, backend service DB80a, DB80b, DB80c; an authentication layer 90, a centralized customer orders and product profile layer 10'.

As shown in figure 1, a multichannel service delivery platform 1 and customer clients 11 are provided. Although various layers are described as being part of a multichannel service delivery platform 1, it will be understood that any number of layers may be provided in the multichannel service delivery platform. For example, more or fewer layers may be added to the multichannel service delivery platform that is described. Customer clients 11 mainly correspond to destination systems from and to requests are being send and/or receive to or from the multichannel service delivery platform 1. Such customer clients 11 may be any system or computer device that can request and receive a service. For example, customer clients 11 may be mobile devices, personal computers, personal digital assistants, desktop computers or any other electronic device.

Also, customer clients 11 may be third party providers, applications, enterprises, network resources, etc. The resources that are exposed may be resources for the network layer and to applications for other layers in the multichannel service delivery platform 1, or in other domains (third parties).

The multichannel service delivery platform is configured to provide different types of services to a customer client 11, such services may include streaming media, call control services, content management, intelligent multi-channel messaging, notification, commerce service, billing information service, inventory and stock information services, product information services, order information services, retail services or any other services.

In order to provide a service, different functions may be performed. Each function may be broken up into separate layers that are concerned with certain functions. For example, a first function may perform the service (e.g., browse a catalog of products) and a second function may deliver the results of the performed services over many different networks (e.g., over different network protocols, channels and technologies, etc).

Thus, a multichannel service delivery platform according to the invention includes **a service layer 40.** Service layer 40 can comprise a plurality of service modules.

Service layer 40 can be configured to provide a service. For example, if an ordering service is being provided, service layer 40 performs the service of providing means to order a product or a service. For example, service layer 40 is not concerned with how the order confirmation or payment of the product or service will be sent to a customer client 11 or to a third party supposed to deliver the order. Such service layer 40 can comprise a plurality of service modules which may correspond to different type of services (as previously described) and processed according to customer clients 11 needs. Indeed, the service layer 40 is advantageously configured to identify a service from a request message MR1 sent by the customer client 11.

For performing communication through the different layers of the multichannel service delivery platform and with a customer client 11, said multichannel service delivery platform comprises a **network layer 20** which is concerned with communicating the result of a performed service to a destination system such as the customer client 11 or a service provider. For example, any network dependencies for sending the result of the service are provided by network layer 20. In one embodiment, network layer 20 is configured to send the results of the services using a network protocol and channel to a customer client 11.

The network layer 20 may support service layer 40 and rely on service layer 40 for the result of the service performed but is not concerned with the functions that are being performed by service layer 40. Conversely, service layer 40 may rely on network layer 20 to send a result but is not concerned with the functions that are being performed by network layer 20 to send the result. Accordingly, service layer 40 and network layer 20 are separated by the functions that the layers are concerned with.

As already mentioned, a multichannel service delivery platform 1 according to the invention comprises **an orchestration layer 50** comprising a rule database, rules of said database being associated with a service workflow. The orchestration layer 50 may leverage the service layer 40 to compose and choreograph services and to coordinate business processes to fulfill customer requirements. Visual flow composition tools such as BPMN-based tools can be used for design of application flow.

In more detail, the orchestration layer 50 may perform three-dimensional process-level handling: top-down, bottom-up, and horizontal. From the top-down direction, the orchestration layer 50 provides facilities to decompose business requirements into tasks comprising activity flows, each being realized by existing business processes, services, and service components. From the bottom-up direction, the orchestration layer 50 provides facilities to compose existing business processes, services, and service components into new business processes. From the horizontal direction, the layer provides services-oriented collaboration control between business processes, services, and service components.

The decomposition of a business process first decomposes it into smaller tasks; then each task is mapped into coarse-grain service (i.e., candidate services) that will be realized by actual web services in the services layer. In other words, the layer may provide the ability to decompose a business process into coarse-grain candidate services that fulfill the business functions. Indeed, the orchestration layer may have access to a rule database which stores, for a given service, technical rules which when applied, enforce technical rules and processes. For example, said rules may integrate how a service can be used by whom, for what, and in what conditions. The orchestration layer may apply policies/rules on any data exchange to and from the service layer. At the level of the orchestration layer, policies are applied based on who requests what. The management of the involved parties (e.g. an account related to a customer client 11) is done at that level by linking policies to relationships. For example, for a given account signed up for a given Service Level Agreement, policies are used to make sure services are authorized, charged at that rate and received at the quality of service rules. For example, technical rules are applied to a request MR1 sent by a customer client 11 for a service. Technical rules may include authenticating a user, applying privacy settings, deciding whether to charge the user and subsequently charging a certain account, deciding who can use the service and under what terms, determining a priority of the user based on agreements signed with him/her (i.e., SLAs-Service Level Agreements), etc.

Moreover, the orchestration layer 50 is configured to identify a service workflow related to the service previously identified by the service layer 40. Orchestration can be applied to one or more network resources based on the access of the content or to the service. Applying orchestration to one or more network resources can comprise performing one or more processes based on the access of the content or to the service. The one or more processes can be defined, for example, in Business Process Execution Language (BPEL) as a linear process or as a State Machines.

The service workflow related to the service previously identified can be executed, on the one or more network resources, based on the orchestration layer 50. For example, the service workflow can comprise a workflow for performing content aggregation. In another example, the service workflow can comprise a workflow for performing management of content. In yet another example, the service workflow can comprise a workflow for performing management of a service. In yet other example, the service workflow can comprise a workflow for performing delivery of content or a service.

In a preferred embodiment of a multichannel service delivery platform 1, the orchestration layer 50 is further configured to coordinate a workflow execution related to several services.

The orchestration layer 50 is further configured to coordinate an execution of the identified service workflow using an integration layer 60 and a presentation layer 10 that will be described after. A service workflow can define the various functions of the content and/or a product or a service of the multichannel service delivery platform. For example, a workflow can include, but is not limited to catalog application flows, subscriber profile management flows, purchasing flows, billing flows, returning goods flows, delivery flows, URI proxy flows, charging flows and user profile flows, adaptation/rendering flows etc.

The customer client 11 may also include one or more server computers which can be general purpose computers, specialized server computers (including, merely by way of example, PC servers, UNIX servers, mid-range servers, mainframe computers rack-mounted servers, etc.), server farms, server clusters, or any other appropriate arrangement and/or combination. One or more of the servers may be dedicated to running applications, such as a business application, a Web server, application server, etc. Such servers may be used to process requests from customer clients 11. The applications can also include any number of applications for controlling access to resources of the servers.

The Web server can be running an operating system including any of those discussed above, as well as any commercially available server operating systems. The Web server or the application server can also run any of a variety of server applications and/or mid-tier applications, including HTTP servers, FTP servers, CGI servers, database servers, Java servers, business applications, and the like. The server(s) also may be one or more computers which can be capable of executing programs or scripts in response to the customer client 11. As one example, a server may execute one or more Web applications. The Web application may be implemented as one or more scripts or programs written in any programming language, such as Java, C, C# or C++, and/or any scripting language, such as Perl, Python, or TCL, as well as combinations of any programming/scripting languages. The server(s) may also include database servers hosting domain specific or business data, including without limitation those commercially available from Oracle, Microsoft, Sybase, IBM and the like, which can process requests from database clients running on a customer client 11.

The multichannel service delivery platform 1 may also include one or more databases such as a **back-end service DB80a, DB80b, DB80c.** The back-end service DB80a, DB80b, DB80c may reside in a variety of locations. By way of example, a back-end service DB80a, DB80b, DB80c may reside on a storage medium local to (and/or resident in) the multichannel service delivery platform 1. Alternatively, it may be remote from any or all of the multichannel service delivery platform 1, and/or in communication (e.g., via a dedicated network) with one or more of these. In a particular set of embodiments, the back-end service DB80a, DB80b, DB80c may reside in a storage-area network ("SAN") familiar to those skilled in the art or on a dedicated server computer. In one set of embodiments, the back-end service DB80a, DB80b, DB80c may be a relational database, such as Oracle 10 g, that is adapted to store, update, and retrieve data in response to SQL (for "Structured Query Language")-formatted commands. Such back-end services may be accessible through a dedicated back-end service layer 80a, 80b, 80c which may be for example a core business application layer, a legacy/mainframe application layer or a supporting application layer.

As stated above, a multichannel service delivery platform 1 according to the invention comprises an **integration layer 60** comprising a transformation rules database. The integration layer 60 may be configured to provide a wide range of functions, which may be encoded in a dedicated module or a building block, linked for example to communication, service Interaction, and integration, such as the ability to take a service call and messages to the end-point; i.e., to enable a service consumer to connect/interact with service providers, the ability to handle service request and service response, the ability to support communication through a variety of protocols, the ability to route messages to the correct service provider, the ability to transform protocol formats; e.g., from SOAP/HTTP to SOAP/Message Queue or SOAP/JMS, the ability to link a variety of systems that do not directly support service-style interactions so that a variety of services can be offered in a heterogeneous environment, the ability to store and forward messages using message queuing.

The integration layer 60 may also be configured to provide a wide range of functions linked for example to message processing, such as the ability to transform data formats; e.g., from proprietary to standard format or industry standards and vice versa, the ability to transform semantic mapping (data positional mapping), the ability to aggregate (including messages and data) from different services and service providers, the ability to propagate the events from producers to consumers.

The integration layer 60 may also be configured to provide a wide range of functions linked for example to Quality of Service, such as the ability to handle transactions from the other layers, especially when a statically composed service invokes a service chain or a workflow, the ability to handle exceptions raised in the process of service invocation and message passing.

The integration layer 60 may also be configured to provide a wide range of functions linked for example to security, such as the ability to authenticate/authorize for service invocation and message routing.

The integration layer 60 may also be configured to provide a wide range of functions linked for example to management, such as the Ability to capture and record message routing and service invocation history, the ability to track and monitor the message routing and service invocation activities, the ability to configure the Integration Layer.

The integration layer 60 is configured to receive a request message MR1 from the orchestration layer 50. Then, the integration layer 60 identifies an appropriate backend service DB80a, DB80b, DB80c from the service workflow previously identified. For example, the integration layer 60 may identify request messages MR1 received from different channels. Based on the channel, the integration layer 60 can determine an address, such as an IP address of the server storing a back-end service DB80a, DB80b, DB80c, for a corresponding channel interface. In some embodiments, the integration layer 60 may be configured to transform the request message MR1 to a standard-based message, such as the request message MR2 according to rules stored on the transformation rules database such that the request message MR2 can be processed by a computer device storing the corresponding back-end services DB80a, DB80b, DB80c. More particularly, the integration layer 60 can analyze request messages MR1, extract data from the request messages MR1 according to the format, and/or rules stored on the transformation rule database, of the received request message MR1 using a corresponding adapter, and insert the extracted data into a new request message MR2 that is sent to the computer device storing the corresponding back-end services DB80a, DB80b, DB80c. Once the request message MR1 has been transformed to the request message MR2, said request message MR2 can be added to queue by the integration layer 60. As previously described, the integration layer 60 is in communication with the orchestration layer 50. As request messages MR2 are processed, the integration layer 60 can dequeue the next request message MR2 and send it according to rules and/or policies of the orchestration layer to the appropriate computer device storing the corresponding back-end services DB80a, DB80b, DB80c. Such processing can include message routing from service to service and ensuring quality of service requirements such as workload management, volume throughput, and average response times. Hence, the integration layer 60 component will also provide capabilities to integrate application into the landscape using the SOA vs Microservices Vs Queue Vs Broker based approach (the unification part of the EAI).

In some embodiments the orchestration layer 50 can determine an orchestration workflow to perform on a given message based on the contents of the message, such as which fields of the message include data and/or the data types included in the message. For example, for messages that include encrypted data, the orchestration layer 60 may select a specific workflow that includes a decryption service.

Once the request message MR2 has been processed by the computer device storing the appropriate back-end service DB80a, DB80b, DB80c, a request answer RA1 is sent from said appropriate backend service DB80a, DB80b, DB80c, in response to the second request message MR2, to the integration layer 60. As previously described in line with the request message MR2, the request answer RA1 can be added to queue by the integration layer 60. The integration layer 60 may be configured to transform the request answer RA1 to a standard-based message, such as the request answer RA2 according to rules stored on the transformation rules database such that the request answer RA2 can be processed by a presentation layer 10. More particularly, the integration layer 60 can analyze request answers RA1, extract data from the request answers RA1 according to the format, and/or rules stored on the transformation rule database, of the received request answer RA1 using a corresponding adapter, and insert the extracted data into a new request answer RA2 that is sent to the presentation layer 10.

As request answers RA1 are processed, the integration layer 60 can be configured to dequeue the next request answer RA1, according to rules and/or policies of the orchestration layer, to be transformed into an appropriate request answer MR2.

A multichannel service delivery platform 1 according to the invention also comprises a **presentation layer 10** configured to deliver a request answer RA2 in a unified format, whatever the channel from which a request message MR1 has been generated. Indeed, as previously described, all the request answers RA1 generated in response to request messages MR2 are transformed into second request answers RA2. More particularly, a request answer RA2 encodes data that can be processed by the presentation layer 10 and delivered through a dedicated human-machine interface of a customer client 11.

Indeed, different platforms hosting e-commerce platforms, knowledge management systems, web content management systems, and bill presentment applications are point solutions. However, the presentation layers of each of these platforms are different. User navigation over these applications or sites is inconsistent, and often, completely different. The Unified Presentation layer according to the invention is one of the key building blocks of a multi-channel architecture and ensures consistency of business functions across the extended enterprise.

This also enables building new business models on top of an API management layer. Multiple use cases can be built, such as APIs from partner ecosystems that can be leveraged to provide preferences-based offers. The API management capability enables the 'Unified Access Layer', to all digital assets and information, for all available channels.

A multichannel architecture service delivery platform according to the invention may further comprise a centralized customer orders and product profile layer 10'. Such a centralized customer orders and product profile layer allows to unite all the information of a customer client 11, more particularly the information linked to one or more accounts of the customer client 11 which are stored in different backend services DB80a, DB80b, DB80c accessible from different channels. The centralized customer orders and product profile layer 10' is configured to gather the information related to one or more account of a customer client 11 stored in the backend services DB80a, DB80b, Db80c which are linked to specific workflows to ensure that an application uses the information consistently and that changes to core business data made by one application are correctly reflected in others.

To provide consistency regarding the information related to a customer orders and product profile client 11 profile, the integration layer 60 may be further configured to update the centralized customer, orders and product profile layer 10' based on the second request answer RA2 before transmitting the second request answer RA2 to the presentation layer 10. Indeed, it may be convenient to update all the related information of a customer client 11 profile in the centralized customer orders and product profile layer 10', so that when a modification of the customer client 11 profile occurs in another backend services DB80a, DB80b, Db80c it is correctly reverberate in one hand on the centralized customer, orders and product profile layer 10' and on second hand on others backend services DB80a, DB80b, Db80c.

A multichannel architecture service delivery platform according to the invention may comprise a **service composition layer 70.** This layer may contain software components, each of which provides the implementation or "realization" for services and their operations, hence the name. The layer may also contain the Functional and Technical Components that facilitate a Service Component to realize one or more services. Service Components reflect the definition of the service they represent, both in terms of functionality and Quality of Service (QoS). They "bind" the service contract/specification to the implementation of the service in the Operational Systems Layer. Service Components are hosted in modules which support the service specifications. Indeed, it is contemplated that the service composition layer 70 mainly comprise interface and binding adaptation layer that allows the use of business rules such as the rules or policies of the orchestration layer 50 performing things such as service composition, choreography/orchestration (as specified by the policies) and transformation of interface from one interface to another (e.g. from interface B to C=T(B) as specified by the policies, where T is any function resulting from what the policy specifies to do). For example, changing the interface from one binding (HTTP) to another (e.g. Corba) may be provided by the service composition layer 70. This performs interface changes. Therefore, the Service Composition Layer 70 may interface with the following layers of the architecture to provide its capabilities: the Integration Layer to transform data from one format to another, the service registry and discovery layer 30 to store metadata about services. The service composition layer 70 may be configured to provide functionalities such as:
- Service Definition: This category of capabilities provides the ability to define the service description.
- Service Runtime Enablement: This category of capabilities provides the ability to support service versioning, to support service binding decoupling a service from its implementation and provides the ability to provision services.
- Policy Management: This category of capabilities provides the ability to manage and enforce policies associated with services.
- Access Control: This category of capabilities provides the ability to manage access to services.
- Service Clustering: This category of capabilities provides the ability to cluster services.

A multichannel architecture service delivery platform according to the invention may comprise a **service registry and discovery layer 30.** Every layer or service may expose an abstract interface for monitoring and life cycle management through the service registry and discovery layer. An execution environment layer can be factored out and provides the mechanism to support life cycle management, execution reliability, scalability, fault tolerance, high availability, carrier grade, etc. support for the services. When the execution environment is factored out, portability is provided because the service may be executed in any execution environment. The service does not have to provide features provided by the execution environment (e.g. support for some functions, protocols like HTTP, caching or high availability, fail over support, load balancing, hot deployment, business activity monitoring, etc). Thus, the layers can be moved to other execution environments. In one embodiment, the realization is J2EE for the execution environment. Enterprise management and JMX may be used to provide life cycle management and monitoring. Services are deployed in the services container in the service Layer. The services can be discovered using the service Registry and discovery layer 30, this can provide the contract and support for virtualization. The service then invokes the corresponding service Component in the service Composition Layer 70 which is then bound to the solution platform and invoked in the Operational Systems Layer represented by the Infrastructural elements of all other layers, underlying infrastructure to run the infrastructural elements (i.e., Operating Systems, etc.), and elements that realize the functional components of services in the service layer 40. The service registry and discovery layer 30 generally comprises a database or a registry populated with information on how to dispatch requests to microservice instances, such as the network locations of service instances and is configured to determine how to resolve a service binding at runtime and its registration.

A multichannel architecture service delivery platform according to the invention may comprise an **authentication layer 90.** The authentication layer 90 may act as a kind of policy enforcer providing access control and enforcing policies related to access control and rights. This may include the enforcement of "trust" policies such as authentication/authorization facilities for service invocation and message routing as well as access privileges for various participants to data. It may typically support authorization and authentication functionalities for registered participants, including federated authentication (single sign-on) and the ability to ensure that the appropriate audit logging is carried out. The authentication layer 90 may depend on the orchestration Layer 50, that may define security policies, to retrieve security policies and act as a local policy decision point and local Policy Enforcement Point (PEP). It can include support for standards such as SAML (authentication and authorization), XDAS, and CBE (audit and logging). It leverages the Identity, Access, and Entitlement Manager module to fulfill its responsibilities. As previously discussed, business rules, such as the rules stored in the database of the orchestration layer 50 may include authenticating a user, applying privacy settings, deciding whether to charge the user and subsequently charging a certain account, deciding who can use the service and under what terms, determining a priority of the user based on agreements signed with him/her (i.e., SLAs-Service Level Agreements). These are imposed by performing policy enforcement on a message request sent to the service layer 40 or provided to a customer client 11. To that end, the authentication layer 90 may comprise one interface of any type of interface that may be used to receive service agreement information for accountholders. By way of example, such interface may be an application interface to receive information from a customer client 11. The service agreement information may be provided and/or selected by accountholders, may be data collected using any other suitable means.

The authentication layer 90 further may include account-holder manager communicatively coupled with the interface. Account-holder manager may be one or more software programs, one or more components of a software program (e.g., function or program object), firmware, or other type of machine-executable instructions that may be used to manage customer information. Account holder manager may be a component of a CRM application, a Partner Relationship Management application, an Enterprise Resource Planning application, or other type of account-relationship management application or solution.

In some embodiments, account-holder manager may be included in a service workflow orchestrated by the orchestration layer 50 using Business Process Execution Language (BPEL). As will be described in further detail below, accountholder may be used to generate policies using service agreement information. A generated policy may include a logical combination of conditions to be satisfied and actions to be executed related to a service agreement. In other aspects, account-holder manager may also or alternatively include logic to manage the relation with the accountholder by enforcing policies associated with accounts and/or accountholders.

Account-holder manager may also be communicatively coupled with one or more back-end service DB80a, DB80b, DB80c. One of the back-end service DB80a, DB80b, DB80c may be a service contract mappings data storage which includes a plurality of service agreement terms. Each of the service agreement terms may be mapped to one or more policy sets.

The authentication layer 90 may also include a policy data storage. In some embodiments, the service contract mappings and the policy data storage may be the same data storage. Policy data storage may be used to store policies generated by account-holder manager. As previously described, a policy may include a logical combination of conditions to evaluate and actions to execute related to a service agreement. Policies may be implemented as programs, program components, or other type of machine-executable instructions. In one embodiment, service agreement enforcement policies may be program objects, such as a BPEL object.

A variety of different types of policies related to a service agreement may be generated by account-holder manager. For instances, policies may be generated which are invoked to provision an account associated with the accountholder. Policies may also be generated which are invoked upon a predetermined event. Merely by way of example, policies may be invoked upon receipt of a communication to access a service, account depletion, absence of settlement of bills, or other type of event related to the accountholder or affecting the accountholder. Other types of policies related to the terms of a service agreement (e.g., billing, settlement policies) may be invoked at scheduled times.

Some of the generated policies may encapsulate conditions to evaluate and actions to be executed to enforce terms of the service agreement with the accountholder. By way of example, a service agreement enforcement policy may include conditions to evaluate and actions to execute to enforce authentication, authorization, service level agreements (prioritization, quality of service, etc.), charging for the service, billing, settlement, and/or other service agreement terms.

In the configuration described above, different components were described as being communicatively coupled to other components. A communicative coupling is a coupling that allows communication between the components. This coupling may be by means of a bus, cable, network, wireless mechanism, program code call (e.g., modular or procedural call) or other mechanism that allows communication between the components. Thus, it should be appreciated that the aforementioned interface customer manager, service contract mappings data storage, and policies data storage may reside on the same or different physical devices.

In an embodiment of the multichannel architecture service delivery platform according to the invention, the authentication layer 90 may be configured to:
- Receive user access information,
- Authenticate user by comparing said user access information to a security repository, and
- Generate a token, upon matching of user access and information to said security repository, said token being sent to the customer client 11.

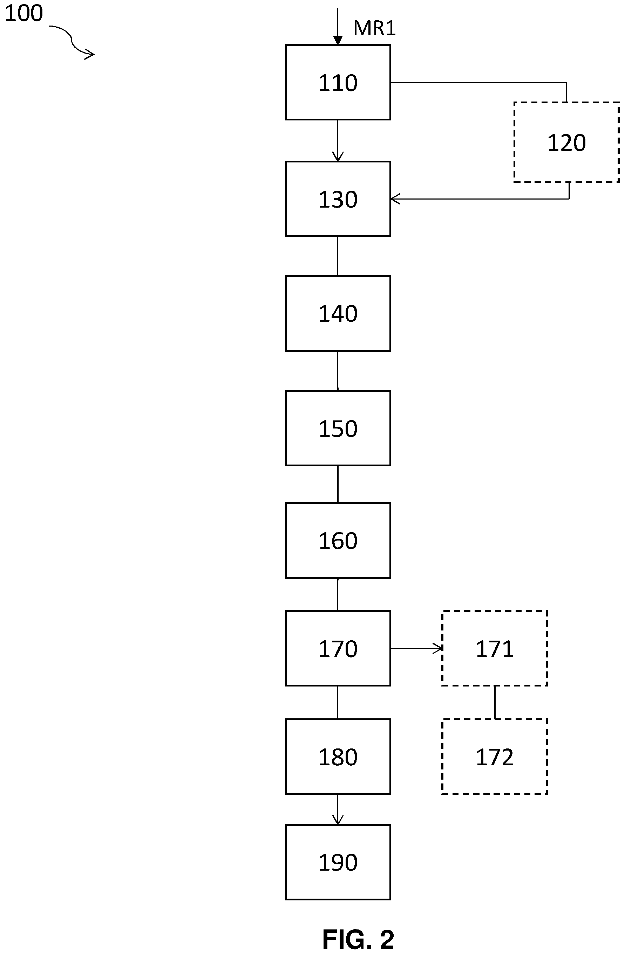

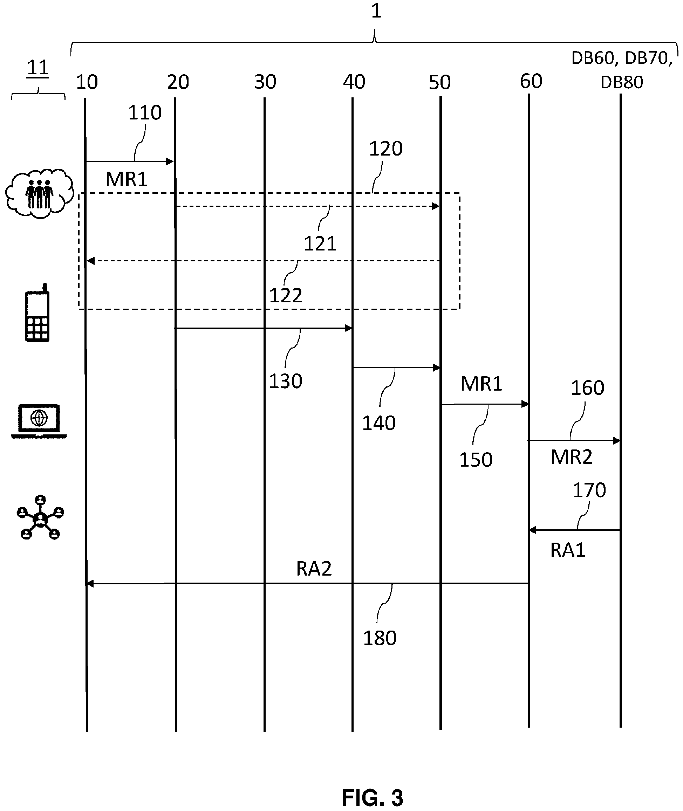

According to a **second aspect** of the invention, and as illustrated in figures 2 and 3, it is provided a method 100 for processing data from a multichannel service delivery platform. As illustrated in figure 2, such method comprises a step of receiving 110 a request message MR1, a step of identifying 130 a service from the request message MR1, a step of identifying 140 a service workflow, a step of coordinating an execution of the identified service workflow, a step of identifying 150 an appropriate backend service DB80a, DB80b, DB80c to the workflow previously identified, a step of transforming 160 the request message MR1, according to predetermined transformation rules, into a second request message MR2 and transmitting said second request message to the appropriate backend service DB80a, DB80b, DB80c, a step of transmitting 170 a request answer RA1, a step of transforming 180, the request answer RA1 and transmitting said second request answer to a presentation layer 10 and a step of delivering 190 the second request answer RA2 in a unified format.

Furthermore, a method 100 for processing data from a multichannel service delivery platform according to the invention may comprise a step of identifying 171 a modification of a core business data from a user and a step of generating 172 several core business data modification message that can be addressed to the appropriate back-end services DB80a, DB80b, DB80c.

Such method 100 may also comprise a step of generating a composite service workflow from at least two service workflows implying several backend services DB80a, DB80b, DB80c. It is also provided a step of gathering customer profile information from several backend services and a step of updating a centralized customer orders and product profile layer 10'.

Thus, as shown in figure 3, a method 100 for processing data from a multichannel service delivery platform comprises a step of receiving 110, by a network layer 20, a request message MR1 sent by a customer client 11. Indeed, when a user is browsing through the customer client 11 over a web application dedicated to the multichannel service delivery platform, it implies that the user is willing to access or to perform actions which imply sending message requests to a server for processing. For example, when the user tries to order or access to his information, a request message MR1 is sent over a communication network, for example over Internet, to the network layer 20. The network layer 20 then transmits the request message MR1 to the service layer 40.

Before being sent to the service layer 40, a method 100 may comprise a step of authenticating 120 a user, to that end the request message MR1 may be send to an authentication layer 90. During the processing of a communication request over a message request, the authentication layer 90 may use, as previously described, business rules, such as the rules stored in the database of the orchestration layer 50 which may include authenticating a user, applying privacy settings, deciding whether to charge the user and subsequently charging a certain account, deciding who can use the service and under what terms, determining a priority of the user based on agreements signed with him/her. The authentication layer 90 may then invoke a service agreement policy to enforce the terms of the service agreement on the communication. If the policy completes successfully, the communication may then be transmitted to the service layer 40. For example, the step of authenticating a user may comprise a step of receiving 121 user access information, a step of authenticating 122 user by comparing said user access information to a security repository, and generate a token, upon matching of user access and information to said security repository, said token being sent to the customer client 11. The authentication layer 90 acts as a gateway or proxy to the service delivery platform and receive, intercept, or otherwise monitor request messages sent by the customer client 11 so that the terms of a service agreement may be enforced. Such message requests received by the network layer 20 may be requests to access or use one or more services provided by the multichannel service delivery platform.

Besides, a method 100 according to the invention comprises a step of identifying 130 a service, by a service layer 40 comprising a plurality of service modules, from the request message MR1 sent by the customer client 11. Such step of identifying 130 a service may be run by comparing in a Service Definition repository supported by the service layer 40, the services in terms of service descriptions/contracts.

Thereafter, if the service may be performed, a method 100 according to the invention comprises the step of identifying 140 a workflow, by an orchestration layer 50 comprising a business rules database, said business rules being associated with a service workflow related to the service identified by the service layer 40. Indeed, such step of identifying 140 a service workflow related to the service previously identified allows to coordinate business processes to fulfill customer requirements. As already described, the orchestration Layer 50 decomposes business requirements into tasks comprising activity flows, each being realized by existing business processes, services, and service components. The decomposition of a business process first decomposes it into smaller tasks; then each task is mapped into coarse-grain service that will be realized by actual services in the Service Layer 40.

To that end, a method 100 according to the invention may further comprise a step of generating a composite service workflow from at least two service workflows, said composite service workflow implying several backend services.

Once the corresponding service workflow has been identified, a method 100 according to the invention comprises a step of coordinating an execution of the identified service workflow, by the orchestration layer 50, using an integration layer 60 and a presentation layer 10. Indeed, the Integration Layer 60 may be a key enabler that provides the capability to mediate which includes transformation, routing, and protocol conversion to transport request messages from the customer client 11 to the correct service provider (i.e. to the appropriate back-end services). Thus, it supports the capabilities required for enabling routing, protocol support and conversion, messaging/interaction style, support for heterogeneous environment, adapters, service interaction, service enablement, service virtualization, service messaging, message processing, and transformation over the different layers.

Furthermore, a method 100 according to the invention comprises a step of identifying 150, by the integration layer 60, an appropriate backend service DB80a, DB80b, DB80c to the service workflow previously identified. Then, the request message MR1 can be route to the appropriate back-end service of a service provider. Indeed, the integration layer provides a level of indirection between the consumer of functionality and its provider. A service consumer interacts with the service provider via the Integration Layer.

Before routing the request message MR1 to the related back-end service, a method 100 according to the invention comprises a step of transforming 160 the request message MR1, according to predetermined transformation rules, into a second request message MR2 and transmitting said second request message to the appropriate backend service DB80a, DB80b, DB80c. It then provides the ability to perform the necessary message transformation to connect the service requestor, such as the customer client 11, to the service provider and to publish and subscribe messages and events asynchronously.

A method 100 according to the invention comprises a step of transmitting 170 a request answer RA1, from the appropriate backend service DB80a, DB80b, DB80c to the integration layer 60 in response to the second request message MR2. This allows messages from one layer to be transformed and passed to the appropriate layer to perform a particular task. More importantly, it allows a layer to delegate a task to another layer, for example, or to pass the context to the next layer to drive the next step of the target end-to-end business process or life cycle management of a service.

Such method 100 may also comprise a step of identifying 171 a modification of a core business data from a user and a step of generating 172 several core business data modification message that can be addressed to the appropriate back-end services DB80a, DB80b, DB80c. Indeed, it may be appropriate to reflect a modification that could impact other workflows associated with other services. The steps of identifying 171 and generating 172 may allow to assure that changes to core business data, such as in a specific back-end services, are correctly reflected in the other back-end services.

A method 100 according to the invention comprises a step of transforming 180, by the integration layer 60, the request answer RA1 according to predetermined transformation rules, into a second request answer RA2 and transmitting said second request answer to the presentation layer 10 and delivering 190, by the presentation layer 10 the second request answer RA2 in a unified format. In this way, this provides consistency with the data exchanged through the request messages whatever the channel from which a request message MR1 has been generated.

A method 100 according to the invention may also comprise a step of gathering customer profile information from several backend services and a step of updating a centralized customer orders and product profile layer 10'. This step may allow to generate a unified profile built on a Virtual Directory offers an identity managed single view of the information about the user such as the customer client 11 from OSS (e.g. assets in inventory), BSS (e.g. bill and subscriptions), network (e.g. HSS via Sh), Dynamic information (e.g. presence or location) and any other service level specific information (e.g. credentials, and application or enabler data).

An example of a method 100 provides a way to link a user identification and behavior between either concurrent or sequential channels and different customer client 11. Linkages are created across channels and customer client 11 within the same session, as well as across sessions. An example makes these links probabilistically based on machine learning and statistical models driven by behavior and other attributes of customer journeys. For example, such method 100 may automatically manage and recycle the assignment of unique identifiers based on, e.g. usage, expiration, time, day, season, product, topic, etc. to optimize performance. Basic logic determines validity within a specific time period, e.g. a day after the interaction when the identifier was assigned. Probabilistic approaches are based upon a combination of time lapse from the interaction where identifier was assigned, IP address or location, or ANI (for automatic number identification) to predict if the individual is the same customer. Machine learning and/or statistical models can be built for the same purpose, based on historic data, e.g. a simple database system that enables assignment, query, search, and management combined with a business rules engine which allows the encoding of the various management constraints and processes.

In a further example of a method 100 it does not require any user inputs, i.e. the method 100 automatically identifies a set of customer behaviors that occur separately, within or across channels and customer client 11 and within and across sessions. In this embodiment, the method 100 makes an association of these different behavior clusters to the same individual, assigns a unique identifier to the individual, continues to track two or more behavior and/or journey sets as belonging to the same individual, and then passes context, behavior, and predictions based on this larger set. This example also learns from contextual interaction and feedback, from environmental interaction and feedback, and from direct interaction and customer feedback as to whether an automated prediction and linkage are correct or incorrect. The method 100 updates both the sets of metadata that are used and the confidence levels both for the specific individual and for the complete system so that future predictions of identity and associations of behavior and/or journey sets are continuously improved and increasingly accurate.

## Claims

1. A multichannel service delivery platform (1) for processing data of a request message (MR1) sent by a customer client device (11) over a channel of a network, said platform providing services and comprising:
- A service layer (40) comprising a plurality of service modules corresponding to said services, said service layer being configured to identify a requested service among said services, from said request message (MR1);
- An orchestration layer (50) comprising a rules database, rules of said database being associated with a service workflow, the orchestration layer (50) being configured to:
∘ Identify a service workflow related to the requested service identified by the service layer (40),
∘ Coordinate an execution of the identified service workflow using an integration layer (60) and a presentation layer (10);
the integration layer (60) comprising a transformation rules database, said integration layer being configured to:
- receive the request message (MR1) from the orchestration layer (50),
- identify an appropriate backend service (DB80a, DB80b, DB80c) from the service workflow previously identified, determined by said channel,
- transform the request message (MR1), according to predetermined transformation rules from the transformation rules database, into a second request message (MR2) and transmit the second request message to the appropriate backend service (DB80a, DB80b, DB80c),
- transform a request answer (RA1), from the appropriate backend service (DB80a, DB80b, DB80c) in response to the second request message (MR2), according to predetermined transformation rules, into a second request answer (RA2), update a centralized customer orders and product profile layer (10') based on the second request answer (RA2) and transmit said second request answer to the presentation layer (10);
the presentation layer (10) being configured to deliver to said device (11), the second request answer (RA2) in a unified format whatever said channel,
- A network layer (20) configured to perform communication between the layers of the multichannel delivery platform and the customer client (11), - the centralized customer orders and product profile layer (10') configured to gather the information related to one or more account of a customer client (11) stored in the backend services DB80a, DB80b, Db80c which are linked to the workflows of said services.

2. The multichannel service delivery platform according to any one of the preceding claims, **characterized in that** the orchestration layer (50) is further configured to coordinate a service workflow execution related to several services.

3. The multichannel service delivery platform according to any one of the preceding claims, **characterized in that** it comprises a service composition layer (70) containing functional and/or technical components that facilitate a service component to realize one or more services.

4. The multichannel service delivery platform according to any one of the preceding claims, **characterized in that** it comprises a service registry and discovery layer (30) configured to register interactions between a layer, more preferably a microservice, and a registry.

5. The multichannel service delivery platform according to any one of the preceding claims, **characterized in that** it comprises an authentication layer (90) configured to provide access control and rights and enforce policies related to said access control providing access control and enforcing policies related to access control and rights.

6. The multichannel service delivery platform according to claim 5, **characterized in that** the authentication layer (90) is configured to:
- Receive user access information,
- Authenticate user by comparing said user access information to a security repository, and
- Generate a token, upon matching of user access and information to said security repository, said token being sent to the customer client (11).

7. A method (100) for processing data of a request message (MR1) sent by a customer client device (11) over a channel of a network at a multichannel service delivery platform providing services, said method comprising the steps of:
- receiving (110), by a network layer (20), said request message (MR1),
- identifying (130) a requested service among said services, by a service layer (40) comprising a plurality of service modules, from the request message (MR1) sent by the customer client (11);
- identifying (140) a service workflow, by an orchestration layer (50) comprising a business rules database, said business rules being associated with the service workflow related to the requested service identified by the service layer (40),
- coordinating an execution of the identified service workflow, by the orchestration layer (50), using an integration layer (60) and a presentation layer (10);
- identifying (150), by the integration layer (60), an appropriate backend service (DB80a, DB80b, DB80c) from the service workflow previously identified,
- transforming (160) the request message (MR1), according to predetermined transformation rules, into a second request message (MR2) and transmitting said second request message to the appropriate backend service (DB80a, DB80b, DB80c) determined by said channel,
- transmitting (170) a request answer (RA1), from the appropriate backend service (DB80a, DB80b, DB80c) to the integration layer (60) in response to the second request message (MR2),
- transforming (180), by the integration layer (60), the request answer (RA1) according to predetermined transformation rules, into a second request answer (RA2),
- updating, by the integration layer (60), a centralized customer orders and product profile layer (10') configured to gather the information related to one or more account of a customer client (11) stored in the backend services (DB80a, DB80b, Db80c) which are linked to the workflows of said services, based on the second request answer (RA2),
- transmitting, by the integration layer (60), said second request answer to the presentation layer (10); and
- delivering (190), by the presentation layer (10) to said device (11), the second request answer (RA2) in a unified format, whatever said channel.

8. The method (100) according to claim 7, **characterized in that** it further comprises a step of identifying (171) a modification of a core business data from a user and a step of generating (172) several core business data modification messages that can be addressed to the appropriate back-end services (DB80a, DB80b, DB80c).

9. The method (100) according to claim 7 or 8, **characterized in that** it further comprises a step of generating a composite service workflow from at least two service workflows, said composite service workflow implying several backend services.

10. The method (100) according to anyone of claims 7 to 9, **characterized in that** it further comprises a step of gathering customer profile information from several backend services and a step of updating a centralized customer orders and product profile layer (10').

## Patentansprüche

1. Mehrkanal-Dienstbereitstellungsplattform (1) zum Verarbeiten von Daten einer Anforderungsnachricht (MR1), die von einer Kunden-Client-Vorrichtung (11) über einen Kanal eines Netzwerks gesendet wird, wobei die Plattform Dienste bereitstellt und Folgendes umfasst:
- eine Dienstschicht (40), die eine Vielzahl von den Diensten entsprechenden Dienstmodulen umfasst, wobei die Dienstschicht konfiguriert ist, um anhand der Anforderungsnachricht (MR1) einen angeforderten Dienst unter den Diensten zu identifizieren;
- eine Orchestrierungsschicht (50), die eine Regeldatenbank umfasst, wobei Regeln der Datenbank mit einem Dienst-Workflow assoziiert sind, wobei die Orchestrierungsschicht (50) konfiguriert ist zum:
∘ Identifizieren eines Dienst-Workflows, der sich auf den durch die Dienstschicht (40) identifizierten angeforderten Dienst bezieht,
∘ Koordinieren einer Ausführung des identifizierten Dienst-Workflows unter Verwendung einer Integrationsschicht (60) und einer Präsentationsschicht (10);
wobei die Integrationsschicht (60) eine Transformationsregeldatenbank umfasst, wobei die Integrationsschicht konfiguriert ist zum:
- Empfangen der Anforderungsnachricht (MR1) von der Orchestrierungsschicht (50),
- Identifizieren eines geeigneten Backend-Dienstes (DB80a, DB80b, DB80c) aus dem zuvor identifizierten, durch den Kanal bestimmten Dienst-Workflow,
- Transformieren der Anforderungsnachricht (MR1) gemäß vorbestimmten Transformationsregeln aus der Transformationsregeldatenbank in eine zweite Anforderungsnachricht (MR2) und Übertragen der zweiten Anforderungsnachricht an den geeigneten Backend-Dienst (DB80a, DB80b, DB80c),
- Transformieren einer Anforderungsantwort (RA1) von dem geeigneten Backend-Dienst (DB80a, DB80b, DB80c) als Reaktion auf die zweite Anforderungsnachricht (MR2) gemäß vorbestimmten Transformationsregeln in eine zweite Anforderungsantwort (RA2), Aktualisieren einer zentralisierten Kundenauftrags- und Produktprofilschicht (10') basierend auf der zweiten Anforderungsantwort (RA2) und Übertragen der zweiten Anforderungsantwort an die Präsentationsschicht (10);
wobei die Präsentationsschicht (10) konfiguriert ist, um die zweite Anforderungsantwort (RA2) unabhängig vom Kanal in einem einheitlichen Format an die Vorrichtung (11) zu übermitteln,
- eine Netzwerkschicht (20), die konfiguriert ist, um die Kommunikation zwischen den Schichten der Mehrkanal-Dienstbereitstellungsplattform und dem Kunden-Client (11) durchzuführen,
- die zentralisierte Kundenauftrags- und Produktprofilschicht (10'), die konfiguriert ist, um die Informationen in Bezug auf ein oder mehrere Konten eines Kunden-Clients (11) zu sammeln, die in den Backend-Diensten DB80a, DB80b, Db80c gespeichert sind, die mit den Workflows der Dienste verknüpft sind.

2. Mehrkanal-Dienstbereitstellungsplattform nach einem der vorstehenden Ansprüche, **dadurch gekennzeichnet, dass** die Orchestrierungsschicht (50) ferner konfiguriert ist, um die Ausführung eines auf mehrere Dienste bezogenen Dienst-Workflows zu koordinieren.

3. Mehrkanal-Dienstbereitstellungsplattform nach einem der vorstehenden Ansprüche, **dadurch gekennzeichnet, dass** sie eine Dienstkompositionsschicht (70) umfasst, die funktionale und/oder technische Komponenten enthält, die es einer Dienstkomponente erleichtern, einen oder mehrere Dienste zu realisieren.

4. Mehrkanal-Dienstbereitstellungsplattform nach einem der vorstehenden Ansprüche, **dadurch gekennzeichnet, dass** sie eine Dienst-Registry- und - Discovery-Schicht (30) umfasst, die konfiguriert ist, um Interaktionen zwischen einer Schicht, vorzugsweise einem Microservice, und einem Registry zu registrieren.

5. Mehrkanal-Dienstbereitstellungsplattform nach einem der vorstehenden Ansprüche, **dadurch gekennzeichnet, dass** sie eine Authentifizierungsschicht (90) umfasst, die konfiguriert ist, um Zugriffskontrolle und -rechte bereitzustellen und Richtlinien in Bezug auf diese Zugriffskontrolle durchzusetzen, wodurch eine Zugriffskontrolle bereitgestellt wird und Richtlinien in Bezug auf die Zugriffskontrolle und -rechte durchgesetzt werden.

6. Mehrkanal-Dienstbereitstellungsplattform nach Anspruch 5, **dadurch gekennzeichnet, dass** die Authentifizierungsschicht (90) konfiguriert ist zum:
- Empfangen von Benutzerzugriffsinformationen,
- Authentifizieren eines Benutzers durch Vergleichen der Benutzerzugriffsinformationen mit einem Sicherheits-Repository, und
- Generieren eines Tokens nach Abgleich des Benutzerzugriffs und der Informationen mit dem Sicherheits-Repository, wobei das Token an den Kunden-Client (11) gesendet wird.

7. Verfahren (100) zum Verarbeiten von Daten einer Anforderungsnachricht (MR1), die durch eine Kunden-Client-Vorrichtung (11) über einen Kanal eines Netzwerks einer Dienste bereitstellenden Mehrkanal-Dienstbereitstellungsplattform gesendet wird, wobei das Verfahren die folgenden Schritte umfasst:
- Empfangen (110) der Anforderungsnachricht (MR1) durch eine Netzwerkschicht (20),
- Identifizieren (130) eines angeforderten Dienstes unter den Diensten durch eine Dienstschicht (40), die eine Vielzahl von Dienstmodulen umfasst, aus der vom Kunden-Client (11) gesendeten Anforderungsnachricht (MR1);
- Identifizieren (140) eines Dienst-Workflows durch eine Orchestrierungsschicht (50), die eine Geschäftsregeldatenbank umfasst, wobei die Geschäftsregeln mit dem Dienst-Workflow verbunden sind, der sich auf den durch die Dienstschicht (40) identifizierten angeforderten Diesnt bezieht,
- Koordinieren einer Ausführung des identifizierten Dienst-Workflows durch die Orchestrierungsschicht (50) unter Verwendung einer Integrationsschicht (60) und einer Präsentationsschicht (10);
- Identifizieren (150) eines geeigneten Backend-Dienstes (DB80a, DB80b, DB80c) aus dem zuvor identifizierten Dienst-Workflow durch die Integrationsschicht (60),
- Transformieren (160) der Anforderungsnachricht (MR1) gemäß vorbestimmten Transformationsregeln in eine zweite Anforderungsnachricht (MR2) und Übertragen der zweiten Anforderungsnachricht an den durch den Kanal bestimmten geeigneten Backend-Dienst (DB80a, DB80b, DB80c),
- Übertragen (170) einer Anforderungsantwort (RA1) von dem geeigneten Backend-Dienst (DB80a, DB80b, DB80c) an die Integrationsschicht (60) als Reaktion auf die zweite Anforderungsnachricht (MR2),
- Transformieren (180) der Anforderungsantwort (RA1) gemäß vorbestimmten Transformationsregeln in eine zweite Anforderungsantwort (RA2) durch die Integrationsschicht (60),
- Aktualisieren, durch die Integrationsschicht (60), einer zentralisierten Kundenauftrags- und Produktprofilschicht (10'), die konfiguriert ist, um die Informationen in Bezug auf ein oder mehrere Konten eines Kunden-Clients (11) zu sammeln, die in den Backend-Diensten (DB80a, DB80b, Db80c) gespeichert sind, die mit den Workflows der Dienste verknüpft sind, basierend auf der zweiten Anforderungsantwort (RA2),
- Übertragen der zweiten Anforderungsantwort an die Präsentationsschicht (10) durch die Integrationsschicht (60); und
- Übermitteln (190) der zweiten Anforderungsantwort (RA2) in einem einheitlichen Format, unabhängig von dem Kanal, durch die Präsentationsschicht (10) an die Vorrichtung (11).

8. Verfahren (100) nach Anspruch 7, **dadurch gekennzeichnet, dass** es ferner einen Schritt des Identifizierens (171) einer Modifikation von Kerngeschäftsdaten von einem Benutzer und einen Schritt des Generierens (172) mehrerer Kerngeschäftsdaten-Modifikationsnachrichten, die an die geeigneten Backend-Dienste (DB80a, DB80b, DB80c) adressiert werden können, umfasst.

9. Verfahren (100) nach Anspruch 7 oder 8, **dadurch gekennzeichnet, dass** es ferner einen Schritt des Generierens eines zusammengesetzten Dienst-Workflows aus mindestens zwei Dienst-Workflows umfasst, wobei der zusammengesetzte Dienst-Workflow mehrere Backend-Dienste impliziert.

10. Verfahren (100) nach einem der Ansprüche 7 bis 9,
**dadurch gekennzeichnet, dass** es ferner einen Schritt des Sammelns von Kundenprofilinformationen aus mehreren Backend-Diensten und einen Schritt des Aktualisierens einer zentralisierten Kundenauftrags- und Produktprofilschicht (10') umfasst.

## Revendications

1. Plateforme de distribution de service multicanal (1) destinée à traiter des données d'un message de demande (MR1) envoyé par un dispositif client consommateur (11) sur un canal d'un réseau, ladite plateforme fournissant des services et comprenant :
- une couche de service (40) comprenant une pluralité de modules de service correspondant auxdits services, ladite couche de service étant configurée pour identifier un service demandé parmi lesdits services, à partir dudit message de demande (MR1) ;
- une couche d'orchestration (50) comprenant une base de données de règles, les règles de ladite base de données étant associées à un flux de travail de service, la couche d'orchestration (50) étant configurée pour :
∘ identifier un flux de travail de service lié au service demandé identifié par la couche de service (40),
∘ coordonner une exécution du flux de travail de service identifié à l'aide d'une couche d'intégration (60) et d'une couche de présentation (10) ;
la couche d'intégration (60) comprenant une base de données de règles de transformation, ladite couche d'intégration étant configurée pour :
- recevoir le message de demande (MR1) à partir de la couche d'orchestration (50),
- identifier un service d'arrière-plan (DB80a, DB80b, DB80c) approprié à partir du flux de travail de service précédemment identifié, déterminé par ledit canal,
- transformer le message de demande (MR1), selon des règles de transformation prédéterminées provenant de la base de données de règles de transformation, en un second message de demande (MR2) et transmettre le second message de demande au service d'arrière-plan (DB80a, DB80b, DB80c) approprié,
- transformer une réponse à la demande (RA1), provenant du service d'arrière-plan (DB80a, DB80b, DB80c) approprié en réaction au second message de demande (MR2), selon des règles de transformation prédéterminées, en une seconde réponse à la demande (RA2), mettre à jour une couche centralisée de commandes de consommateur et de profil de produit (10') sur la base de la seconde réponse à la demande (RA2) et transmettre ladite seconde réponse à la demande à la couche de présentation (10) ;
la couche de présentation (10) étant configurée pour distribuer audit dispositif (11), la seconde réponse à la demande (RA2) dans un format unifié quel que soit ledit canal,
- une couche réseau (20) configurée pour réaliser une communication entre les couches de la plateforme de distribution multicanal et le client consommateur (11),
- la couche centralisée de commandes de consommateur et de profil de produit (10') configurée pour rassembler les informations relatives à un ou plusieurs comptes d'un client consommateur (11) stockés dans les services d'arrière-plan (DB80a, DB80b, Db80c) qui sont liés aux flux de travail desdits services.

2. Plateforme de distribution de service multicanal selon l'une quelconque des revendications précédentes, **caractérisée en ce que** la couche d'orchestration (50) est en outre configurée pour coordonner une exécution de flux de travail de service liée à plusieurs services.

3. Plateforme de distribution de service multicanal selon l'une quelconque des revendications précédentes, **caractérisée en ce qu'**elle comprend une couche de composition de service (70) contenant des composants fonctionnels et/ou techniques qui facilitent un composant de service pour réaliser un ou plusieurs services.

4. Plateforme de distribution de service multicanal selon l'une quelconque des revendications précédentes, **caractérisée en ce qu'**elle comprend un registre de services et une couche de découverte (30) configurés pour enregistrer des interactions entre une couche, plus préférablement un microservice, et un registre.

5. Plateforme de distribution de service multicanal selon l'une quelconque des revendications précédentes, **caractérisée en ce qu'**elle comprend une couche d'authentification (90) configurée pour fournir un contrôle d'accès et des droits et appliquer des politiques liées audit contrôle d'accès fournissant un contrôle d'accès et appliquant des politiques liées au contrôle d'accès et aux droits.

6. Plateforme de distribution de service multicanal selon la revendication 5, **caractérisée en ce que** la couche d'authentification (90) est configurée pour :
- recevoir des informations d'accès d'utilisateur,
- authentifier un utilisateur en comparant lesdites informations d'accès d'utilisateur à un référentiel de sécurité, et
- générer un jeton, lors de la mise en correspondance des accès et des informations d'utilisateur avec ledit référentiel de sécurité, ledit jeton étant envoyé au client consommateur (11).

7. Procédé (100) de traitement de données d'un message de demande (MR1) envoyé par un dispositif client consommateur (11) sur un canal d'un réseau au niveau d'une plateforme de distribution de service multicanal fournissant des services, ledit procédé comprenant les étapes consistant à :
- recevoir (110), par une couche réseau (20), ledit message de demande (MR1),
- identifier (130) un service demandé parmi lesdits services, par une couche de service (40) comprenant une pluralité de modules de service, à partir du message de demande (MR1) envoyé par le client consommateur (11) ;
- identifier (140) un flux de travail de service, par une couche d'orchestration (50) comprenant une base de données de règles métier, lesdites règles métier étant associées au flux de travail de service lié au service demandé identifié par la couche de service (40),
- coordonner une exécution du flux de travail de service identifié, par la couche d'orchestration (50), à l'aide d'une couche d'intégration (60) et d'une couche de présentation (10) ;
- identifier (150), par la couche d'intégration (60), un service d'arrière-plan (DB80a, DB80b, DB80c) approprié à partir du flux de travail de service précédemment identifié,
- transformer (160) le message de demande (MR1), selon des règles de transformation prédéterminées, en un second message de demande (MR2) et transmettre ledit second message de demande au service d'arrière-plan (DB80a, DB80b, DB80c) approprié déterminé par ledit canal,
- transmettre (170) une réponse à la demande (RA1), à partir du service d'arrière-plan (DB80a, DB80b, DB80c) approprié à la couche d'intégration (60) en réaction au second message de demande (MR2),
- transformer (180), par la couche d'intégration (60), la réponse à la demande (RA1) selon des règles de transformation prédéterminées, en une seconde réponse à la demande (RA2),
- mettre à jour, par la couche d'intégration (60), une couche centralisée de commandes de consommateur et de profil de produit (10') configurée pour rassembler les informations relatives à un ou plusieurs comptes d'un client consommateur (11) stockés dans les services d'arrière-plan (DB80a, DB80b, Db80c) qui sont liés aux flux de travail desdits services, sur la base de la seconde réponse à la demande (RA2),
- transmettre, par la couche d'intégration (60), ladite seconde réponse à la demande à la couche de présentation (10) ; et
- distribuer (190), par la couche de présentation (10) audit dispositif (11), la seconde réponse à la demande (RA2) dans un format unifié, quel que soit ledit canal.

8. Procédé (100) selon la revendication 7, **caractérisé en ce qu'**il comprend en outre une étape consistant à identifier (171) une modification de données métier de base provenant d'un utilisateur et une étape consistant à générer (172) plusieurs messages de modification de données métier de base qui peuvent être adressés aux services d'arrière-plan (DB80a, DB80b, DB80c) appropriés.

9. Procédé (100) selon la revendication 7 ou 8, **caractérisé en ce qu'**il comprend en outre une étape consistant à générer un flux de travail de service composite à partir d'au moins deux flux de travail de service, ledit flux de travail de service composite impliquant plusieurs services d'arrière-plan.

10. Procédé (100) selon l'une quelconque des revendications 7 à 9, **caractérisé en ce qu'**il comprend en outre une étape consistant à rassembler des informations de profil de consommateur à partir de plusieurs services d'arrière-plan et une étape consistant à mettre à jour une couche centralisée de commandes de consommateur et de profil de produit (10').
